# FASCICULE DE BREVET EUROPEEN

(11) **EP 2 536 875 B1**
(45) Date de publication et mention de la délivrance du brevet: **20.11.2013**
(21) Numéro de dépôt: 11712920.5
(22) Date de dépôt: 16.02.2011
(51) Int. Cl.: D05B 85/10

(54) **AIGUILLE POUR L'INSERTION D'UN FIL DANS UN PNEUMATIQUE**
NADEL ZUM EINTRAG EINES FADENS IN EINEN REIFEN
NEEDLE FOR INSERTION OF A THREAD IN A TYRE

(30) Priorité: 18.02.2010 FR 1051159
(43) Date de publication de la demande: 26.12.2012
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: DETTORRE, Jean-Marie, 63000 Clermont-Ferrand (FR)
(74) Mandataire: Lasson, Cédric Y. M.
(86) Numéro de dépôt international: PCT/FR2011/050327
(87) Numéro de publication internationale: WO 2011/101592

(56) Documents cités:
- EP-A1- 0 820 932
- EP-A2- 0 041 710
- US-A- 3 498 242
- US-A- 4 611 740

## Description

L'invention concerne la fabrication des pneumatiques de roue de véhicule et en particulier l'insertion d'un fil dans la bande de roulement du pneumatique.

Une aiguille creuse présentant un conduit comprenant un tronçon profilé rectiligne est décrite dans le document US-A-3 498 242.

Il est connu d'insérer des fils électriquement conducteurs dans la bande de roulement d'un pneumatique suivant une direction radiale à un axe du pneumatique. Les fils peuvent avoir une fonction mécanique en améliorant certains contacts du pneumatique avec l'environnement extérieur. Ils permettent aussi de rendre anisotrope le matériau dans lequel ils sont insérés. Ils peuvent en outre assurer la décharge électrostatique du pneumatique, notamment lorsque ce dernier est enrichi en silice.

On constate que les aiguilles utilisées pour percer le pneumatique et y insérer le fil s'usent rapidement.

Un but de l'invention est de prolonger la durée de vie des aiguilles.

On prévoit à cet effet selon l'invention une aiguille pour l'insertion d'un fil dans un pneumatique, qui présente :
- une zone de perçage ayant un axe de symétrie, et
- un conduit présentant une embouchure proximale et une embouchure distale débouchant dans la zone et excentrée par rapport à l'axe, le conduit étant constitué par l'embouchure proximale et par un tronçon profilé rectiligne comprenant l'embouchure distale.

Ainsi, la zone de perçage se trouve renforcée d'un côté de l'axe par un surcroît de matière, ce qui permet de la rendre plus résistante à l'usure.

De plus, le tronçon étant rectiligne, il est dépourvu d'obstacles tels que coude, courbure ou chicane. S'il en présentait, il y aurait un risque important de bourrage lors de l'avancée du fil dans l'aiguille, ce qui bloquerait le fil dans l'aiguille et compromettrait l'ensemble du procédé. Avec le tronçon rectiligne qui forme la plus grande partie de l'aiguille, on réduit ce risque au minimum de sorte qu'on facilite grandement l'avancée du fil dans l'aiguille. Cet avantage est d'autant plus important que le fil utilisé, qui est souvent en métal, présente une rigidité tout juste suffisante pour lui permettre d'être poussé dans le conduit. En outre, on souhaite que le fil avance le plus vite possible dans le conduit car sa vitesse est un des paramètres limitant la vitesse d'exécution du procédé. Or le risque de bourrage augmente si on augmente la vitesse du fil. L'intérêt d'un tronçon rectiligne est donc particulièrement grand pour les grandes vitesses d'exécution.

En outre, la forme rectiligne du conduit sur la plus grande partie de sa longueur lui permet d'avoir une inclinaison très faible, voire nulle, par rapport à l'axe de symétrie dans la zone de perçage. Dès lors, l'arête formant l'intersection entre la zone de perçage et l'embouchure distale présente, en coupe axiale, du côté de l'axe de symétrie, un angle qu'on peut plus facilement réaliser comme obtus et même proche de 180°. Il est par exemple compris entre 135 et 180°, voire entre 160 et 180°. Cette arête est donc très peu prononcée et réduit les risques que l'aiguille accroche le fil et l'emporte lorsqu'elle recule pour laisser le fil dans la gomme.

Avantageusement, l'embouchure distale s'étend tout entière d'un même côté de l'axe.

De préférence, l'embouchure distale s'étend tout entière à distance de l'axe.

Ainsi, la partie renforcée de la zone se trouve dans l'axe de l'aiguille et présente une résistance à l'usure particulièrement élevée.

Avantageusement, le conduit présente un axe de conduit incliné par rapport à l'axe de symétrie de la zone.

Il s'agit d'un mode de réalisation de l'invention simple à fabriquer, qui ne fragilise pas une partie de l'aiguille et qui permet de concilier le renfort de la zone de perçage et la forme rectiligne du conduit.

Avantageusement, la zone de perçage présente une face à symétrie de révolution dans laquelle débouche l'embouchure distale tout entière.

De préférence, l'aiguille présente une zone de support dans laquelle débouche l'embouchure proximale en étant concentrique à la zone de support.

Ainsi, bien que le conduit soit décentré dans la zone de perçage, il demeure centré dans l'autre zone, notamment pour faciliter la tenue de l'aiguille par le dispositif d'insertion et la robustesse de l'aiguille à cet endroit.

Avantageusement, l'aiguille est rectiligne.

De préférence, l'aiguille est réalisée en métal ou en alliage métallique.

De préférence, la zone de perçage présente une dureté plus grande que celle d'une autre partie de l'aiguille.

En effet, le surplus de matière obtenu par le dé-centrage du conduit rend particulièrement efficace l'application d'un traitement destiné à en accroître la dureté.

On prévoit également selon l'invention un dispositif pour l'insertion d'un fil dans un pneumatique, qui comprend une aiguille selon l'invention.

On prévoit enfin selon l'invention un procédé dans lequel on insert un fil dans un élément comprenant de la gomme au moyen d'une aiguille selon l'invention.

D'autres caractéristiques et avantages de l'invention apparaîtront encore dans la description suivante d'un mode préféré de réalisation donné à titre d'exemple non limitatif en référence aux dessins annexés sur lesquels ;
- la figure 1 est une vue en perspective d'un pneumatique fabriqué au moyen de l'invention ;
- les figures 2, 3 et 4 sont des vues respectivement en perspective, de côté et en coupe axiale suivant le plan IV-IV de la figure 3, plan de symétrie longitudinal médian, d'une aiguille selon l'invention ;
- la figure 5 est une vue à plus grande échelle du détail D de la figure 4;
- les figures 6 et 7 sont des vues analogues à la figure 5 montrant le fil dans l'aiguille;
- la figure 8 est une vue en perspective d'un dispositif selon l'invention;
- les figures 9 à 11 représentent des détails de fonctionnement du couteau lors de la création de l'amorce au moyen du dispositif de la figure 8;
- la figure 12 représente les différentes phases du cycle d'implantation d'un insert selon un premier mode d'utilisation du dispositif;
- les figures 13 et 14 sont des vues en perspective des positions des pièces du dispositif à des phases particulières du cycle d'implantation; et
- la figure 15 est une vue en perspective d'une variante d'exécution du dispositif selon l'invention.

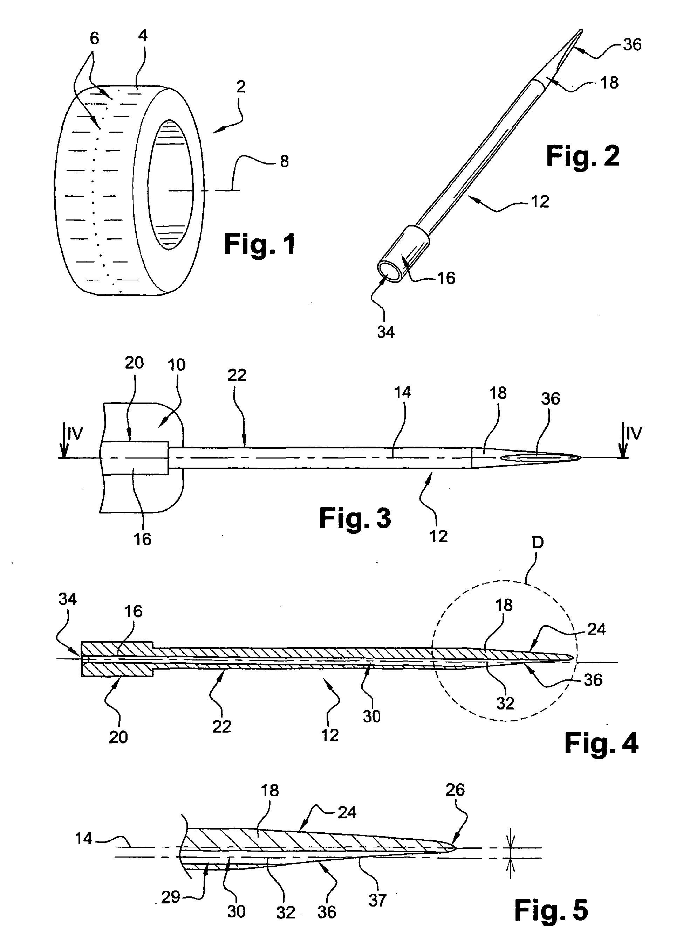

On a illustré à la figure 1 un pneumatique 2 prévu notamment pour des roues de véhicule de type léger, poids lourds ou génie civil.

Ce pneumatique présente en périphérie sur sa circonférence une bande de roulement 4 dans laquelle sont insérés des fils 6 s'étendant sur au moins un tronçon du fil suivant une direction radiale à un axe de symétrie général 8 du pneumatique. Les fils 6 s'étendent en l'espèce dans une zone de la bande de roulement enrichie en silice. Ils sont conducteurs de l'électricité. Leur extrémité se trouve au niveau de la face externe de la bande de roulement.

En référence aux figures 2 à 5, les fils 6 sont insérés lors de la fabrication du pneumatique au moyen d'un dispositif 10 portant une aiguille 12. Cette dernière présente une forme allongée, en l'espèce rectiligne. Elle a un axe de symétrie 14 qui s'étend suivant la fibre moyenne de l'aiguille, l'aiguille ayant une forme générale externe à symétrie de révolution autour de cet axe.

L'aiguille 12 présente, à gauche sur les figures, une zone d'extrémité proximale ou zone de support 16, et à droite une zone d'extrémité distale ou zone de perçage 18.

La zone d'extrémité proximale 16 présente une face externe cylindrique 20 à section transversale circulaire. A partir de cette zone, l'aiguille présente une face externe cylindrique 22, à section transversale circulaire, s'étendant en direction de la zone de perçage 18 et présentant un diamètre inférieur à celui de la zone proximale 16. La face 22 forme le corps de l'aiguille et s'étend sur plus de la moitié de la longueur de cette dernière. A partir de l'extrémité droite de la face 22, la zone de perçage 18 présente une première face 24 à symétrie de révolution qui est en l'espèce de forme tronconique, le diamètre du cône allant en se réduisant à mesure qu'on s'éloigne de la zone de support. A partir du bord droit de cette face, la zone 18 présente une deuxième face tronconique 26 présentant un angle d'ouverture supérieur à l'angle de la face 24. Cette face 26, également à symétrie de révolution, constitue l'extrémité terminale de la zone de perçage et de l'aiguille.

Les quatre faces 20, 22, 24 et 26 ont l'axe 14 pour axe de symétrie.

L'aiguille 12 présente un conduit longitudinal interne 30. Le conduit présente un axe de symétrie 32 distinct de l'axe 14 et incliné par rapport à ce dernier. Le conduit est en l'espèce rectiligne et à section circulaire dans un plan perpendiculaire à son axe 32. Le conduit 30 présente une embouchure proximale 34 débouchant dans la zone de support 16, ainsi qu'une embouchure distale 36 débouchant dans la zone de perçage 18.

Le conduit présente un tronçon 29 s'étendant à partir de l'embouchure proximale 34 en étant contiguë à cette dernière. Ce tronçon continu unique comprend l'embouchure distale 36 et est rectiligne, profilé et cylindrique. Le conduit est donc ici constitué par l'embouchure proximale, de forme évasée, et par le tronçon profilé.

L'axe 32 est sécant avec l'axe 14 au niveau de l'embouchure proximale 34 de sorte que cette dernière est centrée sur chacun de ces deux axes.

L'inclinaison de l'axe 32 par rapport à l'axe 14 et le diamètre du conduit 30 et du tronçon 29 sont choisis de sorte que l'embouchure distale 36 s'étend tout entière d'un même côté de l'axe 14, à distance de ce dernier, et tout entière dans la face tronconique 24. Formée par l'intersection du conduit 30 qui est à section transversale circulaire et de la face tronconique 24, l'embouchure 36 a une forme proche de celle d'une ellipse. L'embouchure 36 est donc notamment excentrée par rapport à l'axe 14, son centre 37 étant distant de cet axe.

L'embouchure 36 laisse donc libre l'intégralité de la deuxième face tronconique 26 formant l'extrémité distale de l'aiguille. On voit notamment sur la figure 5 que la zone d'extrémité libre terminale de l'aiguille s'étend des deux côtés de l'axe 14 et d'un même côté du conduit 30. Elle est donc formée par une quantité de matière relativement grande qui permet d'en renforcer la résistance mécanique à l'usure. On observe que l'aiguille a donc une extrémité libre de forme conique au niveau de la face 26, sans que ce cône soit entamé.

Dans le présent exemple, l'aiguille est réalisée en acier. On prévoit que la zone d'extrémité de perçage 18 au moins fait l'objet lors de la fabrication de l'aiguille d'un traitement permettant de lui conférer une dureté supérieure à la dureté du reste de l'aiguille. Indépendamment de ce traitement et de la position du conduit 30 et de ses embouchures, l'aiguille est réalisée de façon conventionnelle.

On peut donner au conduit un diamètre de 0,5 mm et une inclinaison de 0,7° par rapport à l'axe 14. On peut donner à l'aiguille une longueur totale de 35 mm et un diamètre de 1,5 mm au niveau de la face 22. Il ne s'agit là que d'un exemple et des dimensions différentes peuvent être choisies.

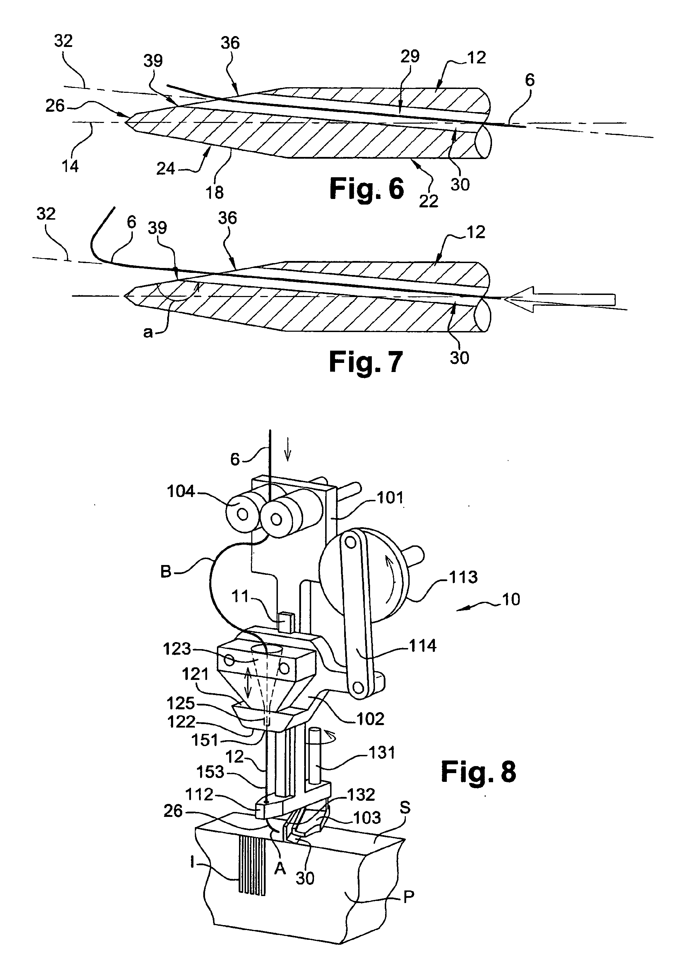

On a illustré aux figures 8 à 12 un dispositif 10 portant et manoeuvrant l'aiguille selon l'invention. Il comprend un bâti 101 sur lequel sont montés un moyen d'alimentation 104 du fil 6 qui est ici métallique, un support mobile 102 supportant l'aiguille creuse 12 et un moyen de coupe 103.

Le moyen d'alimentation 104, est placé en tête du bâti 101, et permet de délivrer le fil 6 à une vitesse constante donnée et régulée.

Le support mobile 102 est relié au bâti par l'intermédiaire d'un rail de guidage rectiligne 111. Ce support mobile 102 est animé d'un mouvement alternatif entre une position relevée et une position basse par une biellette 114 et un vilebrequin 113 animé en rotation par un moteur (non représenté) solidaire du bâti 101.

On entend par position relevée la position du bâti correspondant à la phase du cycle au cours de laquelle le bâti est à la position la plus éloignée de la surface S du profilé P, et par position basse la position correspondant à la phase du cycle au cours de laquelle le bâti est à la position la plus proche de la surface S.

Le support mobile 102 comprend une base 122 et un sommet 121 entre lesquels est pratiqué un conduit 125 (en pointillés) de guidage du fil 6.

L'aiguille creuse 12, comportant le conduit ou canal 30 dans lequel circule le fil 6, est fixée par son extrémité proximale 16 à la base du support mobile 102 dans la prolongation du conduit 125 pratiqué entre la base 122 et le sommet 121 du support mobile 102. La pointe de l'aiguille, de laquelle sort le fil 6, est dirigée vers la surface S du profilé P. L'aiguille est solidaire du mouvement alternatif du support 2.

Le diamètre de l'aiguille est choisi de manière à améliorer la pénétration de l'aiguille dans la gomme. De préférence on choisira l'aiguille du plus petit diamètre extérieur et correspondant au diamètre du fil à implanter qui peut varier de 0,1 mm à 1 mm dans le cas des applications les plus courantes. On s'assurera bien évidemment du bon coulissement du fil à l'intérieur du canal intérieur de l'aiguille. Pour ce faire, la différence de diamètre entre le fil et le diamètre intérieur de l'aiguille de préférence n'est pas inférieure à 0,05mm.

Pour améliorer le guidage de l'aiguille dans son mouvement de montée et descente, un moyen de guidage 112 dans lequel l'aiguille circule librement est disposé à la base du bâti 102, au plus prés de la surface S du profilé P, de sorte que la pointe de l'aiguille ne s'échappe pas du moyen de guidage lorsque le support mobile est en position relevée.

Pour améliorer le guidage du fil 6 à l'entrée du conduit 125 située sur le sommet 121 du support mobile 102, un moyen de guidage du fil 123 est disposé sur le sommet dudit support. Ce moyen de guidage du fil 123 a la forme d'un passage de forme tronconique, dont le plus petit diamètre est placé du coté du conduit 125 pratiqué entre le sommet et la base du support mobile, et dont le plus grand diamètre est placé à l'entrée du fil 6 dans le moyen de guidage. Il va de soi que le moyen de guidage n'est pas lié à cette forme particulièrement simple de réalisation et peut faire l'objet de nombreuses adaptations.

Un moyen de coupe 103 comportant une lame 130 comprenant un fil ou arête de coupe 134, est implanté dans la partie basse du bâti 101. Ce moyen de coupe a la forme d'un couteau animé en rotation autour d'un axe 131, sensiblement parallèle à la direction du mouvement de l'aiguille, par un moteur (non représenté) fixé au bâti 101. Le moyen de coupe est disposé de façon réglable en translation sur l'axe 131 de manière à sectionner le fil 6 entre la surface S du profilé et la pointe de l'aiguille 152 à une distance donnée d et ajustable de ladite pointe. Le couteau rotatif est placé entre le moyen de guidage 112 de l'aiguille 12, et la surface S du profilé P.

Le mouvement rotatif du couteau est réglé de manière à effectuer un tour complet à chaque cycle de va-et-vient de l'aiguille. Ce mouvement est calé de telle sorte que le fil 6 est sectionné lorsque la pointe de l'aiguille est en position relevée. A cet effet, il peut être intéressant d'utiliser le même moyen de motorisation pour animer le vilebrequin 113 et le couteau rotatif 103, en adaptant en conséquence les transmissions mécaniques.

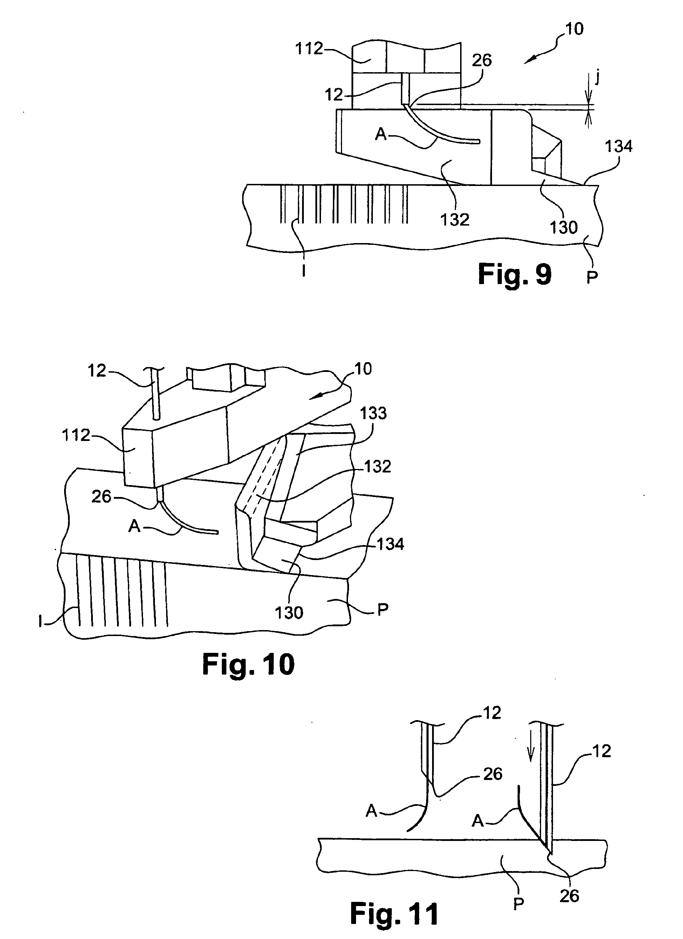

La lame 130 du couteau est prolongée par une palette 132 s'étendant sensiblement perpendiculairement au plan de la lame. En considérant le sens de progression de la lame, la palette 132 est placée en arrière du fil de coupe, de manière à donner un impact à l'amorce immédiatement après la coupe du fil. Cette impulsion a pour effet de forcer l'extrémité libre du fil constituant l'amorce à se replier autour de la pointe 152 comme cela est illustré par les figures 9 et 10.

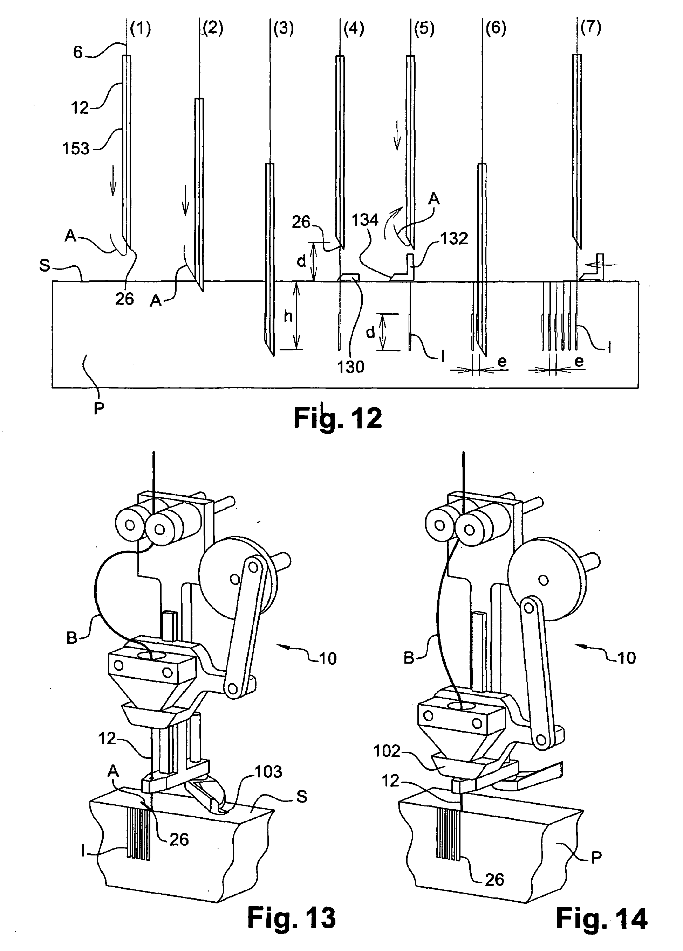

Les principales positions du cycle d'animation du dispositif selon l'invention sont détaillées dans la figure 12, et sont repérées par les chiffres (1) à (6) placés entre parenthèses. Chaque cycle correspond à l'implantation d'un insert I dans le profilé P. L'insert est formé par un tronçon du fil 6 et le profilé comprend de la gomme et est destiné à former une partie de la bande de roulement du pneumatique 2.

La première position (1) correspond à la position relevée de l'aiguille 12 au départ de son mouvement en direction de la position basse juste après la coupe. On observe que l'extrémité libre du fil 6 dépasse de la pointe de l'aiguille 26 pour former une amorce A. repliée autour du bord du canal de sortie du fil de l'aiguille.

La longueur de l'amorce A doit être choisie judicieusement. En effet elle ne doit pas être trop longue de manière à ce que, pendant la pénétration de l'aiguille dans le profilé, les forces de frottement entre l'amorce et le produit caoutchoutique du profilé ne soient pas supérieures à l'effet de coin qui permet à l'aiguille d'insérer le fil dans la gomme, mais elle ne doit pas non plus être trop courte de manière à ce que, lors de la remontée de l'aiguille, l'amorce reste en position au fond de la perforation. En pratique on considérera, pour les fils métalliques ou textiles usuellement employés dans l'industrie du pneumatique, que la longueur de l'amorce peut utilement être comprise entre 10 fois et 20 fois la valeur du diamètre, soit en règle générale une longueur comprise entre 3 mm et 5 mm, ce qui couvre la plupart des applications dans ce domaine. De même, plus le diamètre du fil est important, plus la longueur de l'amorce peut être réduite. En tout état de cause, on veillera à ce que la longueur de l'amorce soit inférieure à la profondeur de pénétration (h).

La deuxième position (2) correspond au mouvement de descente de l'aiguille 12, et au moment où la pointe de l'aiguille perce la surface S du profilé en caoutchouc P. Cette position est illustrée également dans la vue en perspective de la figure 13.

On observe qu'à cet instant précis, l'amorce A est repliée le long de l'aiguille 12. Dans cette configuration le fil est bloqué par le bord du canal de sortie, ce qui prive le fil de tout mouvement dans la direction opposée au sens de progression de l'aiguille. Le bord du canal de sortie de l'aiguille fait son office de coin et empêche l'amorce d'entraîner le fil.

La troisième position (3) correspond à la position basse de l'aiguille, dans laquelle la pointe de l'aiguille pénètre dans le profilé à une profondeur h donnée, et correspond à la vue en perspective de la figure 14.

L'aiguille initie alors un mouvement de remontée de sa position basse vers sa position haute illustrée à la position (4). La position relevée est atteinte lorsque la pointe de l'aiguille est distante d'une longueur d donnée et réglable de la surface S du profilé P.

Pendant ce mouvement de remontée, la partie libre du fil et de l'amorce A sont enserrés par le matériau caoutchoutique du profilé. Les forces de frottement s'exerçant sur l'amorce et, de manière progressive, sur le reste du fil libéré par l'aiguille, autorisent la mise en tension du fil 6 et l'aiguille remonte le long du fil qui demeure fixe par rapport à la surface S du profilé P.

Au moment où la position relevée est atteinte, la lame 130 sectionne le fil et libère une amorce A disponible pour l'implantation de l'insert I suivant, comme cela est illustré par la position (4).

On observe qu'il est intéressant de sectionner le fil au plus près de la surface S. A cet effet il suffit de disposer le dispositif d'implantation selon l'invention en positionnant la lame 130 au plus prés de la surface S.

Ce cas de figure correspond au cas le plus fréquemment rencontré dans le domaine des pneumatiques et permet utilement de réaliser une coupe du fil relativement propre dés lors que la surface joue en quelque sorte le rôle d'une enclume apte à maintenir le fil pendant la coupe. Lorsqu'il s'avère nécessaire de laisser le fil dépasser de la surface, il pourrait s'avérer utile de faire collaborer la lame de coupe avec une contre-lame d manière à éviter des efforts de rappel trop importants sur le fil.

Le réglage de la longueur d, qui détermine la longueur de l'amorce A, se fait en plaçant le support 102 en position relevée, et en adaptant la position axiale de la lame sur son axe 131. Le réglage de la profondeur P se fait en modifiant l'amplitude du mouvement du support 102 en jouant sur le diamètre du vilebrequin 113. L'amplitude correspond à la profondeur h augmentée de la longueur d.

Juste après la coupe, comme cela est illustré illustrée par la position (5), la palette 132 vient heurter le fil et confère une impulsion à l'amorce A dans une direction sensiblement perpendiculaire au sens du mouvement de l'aiguille.

Pour que le repli de l'amorce soit le plus prononcé possible, on s'arrange pour que le jeu j entre le bout de l'aiguille 12 en position haute et la palette 132 soit aussi faible que possible, et au moins égal au diamètre du fil, comme cela est illustré à la figure 9. Le jeu j peut utilement être compris entre une et cinq fois le diamètre du fil.

Il peut aussi être pratique de pouvoir ajuster le jeu j lorsque la longueur de l'amorce varie. A cet effet, on peut donc prévoir des jeux de palettes amovibles de hauteurs variables en fonction de la longueur de l'amorce désirée et fixées sur le support 133 de la lame portant la palette 132.

Ce mouvement de repli de l'amorce autour de la pointe 26, comme cela est illustré à la figure 11, est suffisant pour bloquer le mouvement de remontée du fil à l'intérieur de l'aiguille, lors du déplacement de l'aiguille entre la position haute illustrée en (5) et la position dans laquelle la pointe pénètre dans la surface du profilé illustrée en (2).

De manière à éviter la remontée du fil, on s'arrange également pour que la tension du fil à l'entrée du conduit 30 de l'aiguille soit nulle, en pilotant le moyen d'alimentation 104 de manière à ce que la portion de fil comprise entre le moyen d'alimentation 104 disposé sur le bâti 101, et l'entrée 151 du conduit 125 ou du moyen de guidage 123, fasse une boucle B, quelle que soit la position du support mobile 102, comme cela est illustré à la figure 8.

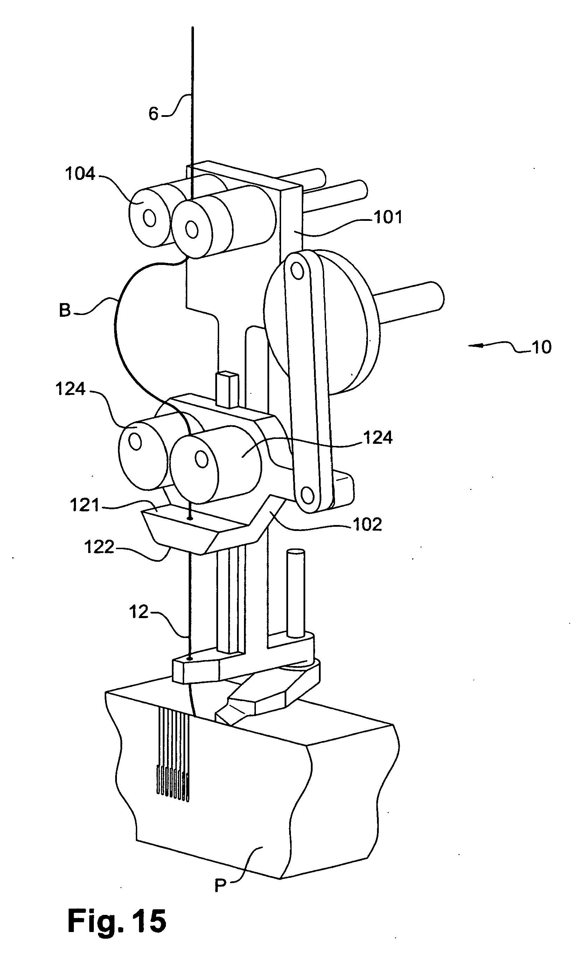

La figure 15 illustre le cas d'un dispositif dans lequel le moyen de guidage se présente sous la forme de deux rouleaux 124 entre lesquels le fil peut circuler. Ces rouleaux peuvent être totalement libres en rotation dans les deux sens ou être bloqués en rotation dans un des deux sens de manière à interdire la remontée du fil en cas de mise en tension intempestive de la partie de fil comprise entre les rouleaux 124 et le moyen d'alimentation 103.

L'implantation de l'insert I suivant se fait en déplaçant le profilé d'un pas e relativement au bâti 101, comme cela est illustré par la position (6), puis en reproduisant le cycle qui vient d'être décrit.

En répétant ces opérations autant de fois que nécessaire, on obtient un profilé de caoutchouc dans lequel des inserts I sont implantés de façon régulière, tel que cela est représenté à la position (7).

L'insert de longueur h comporte à sa base un repli de longueur d correspondant à l'amorce A. La présence d'une double longueur de fil à la base de l'insert présente l'avantage de renforcer de manière préférentielle la base des éléments de sculpture, lorsque la surface S correspond à la surface d'une bande de roulement de pneumatique en contact avec le sol.

Le cycle faisant l'objet de la présente description illustre le cas dans lequel les inserts sont implantés perpendiculairement à la surface S du profilé P. Il est bien évidemment possible de modifier l'angle d'implantation en inclinant le bâti de sorte que le rail 11 sur lequel circule le support mobile 2 fasse un angle donné avec la surface S.

La forme rectiligne du tronçon 29 facilite l'avancée du fil à grande vitesse dans l'aiguille tout en réduisant les risques de bourrage.

En outre, cette forme rectiligne lui permet d'avoir une inclinaison très faible par rapport à l'axe de symétrie 14. Dès lors, comme illustré aux figures 6 et 7, l'arête 39 formant l'intersection entre la face tronconique 24 et l'embouchure distale 36 présente, en coupe axiale, du côté de l'axe de symétrie, un angle a qu'on peut plus facilement réaliser comme obtus et même proche de 180°. Il est par exemple compris entre 135 et 180°, voire entre 160 et 180°. Cette arête 39 est donc très peu prononcée à cet endroit et réduit les risques que l'aiguille accroche le fil et l'emporte lorsque l'aiguille recule pour laisser le fil dans la gomme. On rappelle en effet que la matière dans laquelle a lieu le piquage est molle et qu'elle applique une pression sur le fil et l'aiguille, notamment à l'endroit où le fil frotte sur l'arête.

Bien entendu, on pourra apporter à l'invention de nombreuses modifications sans sortir du cadre de celle-ci.

On pourrait prévoir que les deux axes 14 et 32 sont parallèles et distants l'un de l'autre.

Le ou les matériaux constituant l'aiguille peuvent être des matériaux non-métalliques tels que des céramiques (Zicone, alumine...).

## Revendications

1. Aiguille (12) d'insertion d'un fil (6) dans un pneumatique (2), **caractérisée en ce qu'**elle présente :
- une zone de perçage (18) ayant un axe de symétrie (14), et
- un conduit (30) présentant une embouchure proximale (34) et une embouchure distale (36) débouchant dans la zone de perçage (18) et excentrée par rapport à l'axe de symétrie (14), le conduit étant constitué par l'embouchure proximale et par un tronçon profilé rectiligne (29) comprenant l'embouchure distale.

2. Aiguille selon la revendication précédente, dans laquelle l'embouchure distale (36) s'étend tout entière d'un même côté de l'axe (14),

3. Aiguille selon au moins l'une quelconque des revendications précédentes, dans laquelle l'embouchure distale s'étend tout entière à distance de l'axe.

4. Aiguille selon au moins l'une quelconque des revendications précédentes, dans laquelle le conduit (30) présente un axe de conduit (32) incliné par rapport à l'axe de symétrie (14) de la zone.

5. Aiguille selon au moins l'une quelconque des revendications précédentes, dans laquelle la zone de perçage (18) présente une face (24) à symétrie de révolution dans laquelle débouche l'embouchure distale (36) tout entière.

6. Aiguille selon au moins l'une quelconque des revendications précédentes, dans laquelle l'aiguille présente une zone de support (16) dans laquelle débouche l'embouchure proximale (34) en étant concentrique à la zone de support.

7. Aiguille selon au moins l'une quelconque des revendications précédentes, réalisée en métal ou en alliage métallique.

8. Aiguille selon au moins l'une quelconque des revendications précédentes, dans laquelle la zone de perçage (18) présente une dureté plus grande que celle d'une autre partie de l'aiguille.

9. Dispositif (10) d'insertion d'un fil (6) dans un pneumatique (2), **caractérisé en ce qu'**il comprend une aiguille (12) selon au moins l'une quelconque des revendications précédentes.

10. Procédé de fabrication d'un pneumatique **caractérisé en ce qu'**on insert un fil (6) dans un élément (P) comprenant de la gomme au moyen d'une aiguille (12) selon au moins l'une quelconque des revendications 1 à 8.

## Patentansprüche

1. Nadel (12) zum Einführen eines Drahts (6) in einen Luftreifen (2), **dadurch gekennzeichnet, dass** sie aufweist:
- einen Bohrbereich (18) mit einer Symmetrieachse (14), und
- einen Kanal (30) mit einer proximalen Mündung (34) und einer distalen Mündung (36), die in den Bereich (18) mündet und bezüglich der Symmetrieachse (14) außermittig ist, wobei der Kanal aus der proximalen Mündung und einem geradlinigen Profilabschnitt (29) besteht, der die distale Mündung enthält.

2. Nadel nach dem vorhergehenden Anspruch, wobei die distale Mündung (36) sich ganz auf der gleichen Seite der Achse (14) erstreckt.

3. Nadel nach mindestens einem der vorhergehenden Ansprüche, wobei die distale Mündung sich ganz in Abstand zur Achse erstreckt.

4. Nadel nach mindestens einem der vorhergehenden Ansprüche, wobei der Kanal (30) eine bezüglich der Symmetrieachse (14) des Bereichs geneigte Kanalachse (32) aufweist.

5. Nadel nach mindestens einem der vorhergehenden Ansprüche, wobei der Bohrbereich (18) eine Seite (24) mit Drehsymmetrie aufweist, in die die distale Mündung (36) ganz mündet.

6. Nadel nach mindestens einem der vorhergehenden Ansprüche, wobei die Nadel einen Trägerbereich (16) aufweist, in den die proximale Mündung (34) mündet, indem sie zum Trägerbereich konzentrisch ist.

7. Nadel nach mindestens einem der vorhergehenden Ansprüche, die aus Metall oder einer Metalllegierung hergestellt ist.

8. Nadel nach mindestens einem der vorhergehenden Ansprüche, wobei der Bohrbereich (18) eine größere Härte als die eines anderen Teils der Nadel aufweist.

9. Vorrichtung (10) zum Einführen eines Drahts (6) in einen Luftreifen (2), **dadurch gekennzeichnet, dass** sie eine Nadel (12) nach mindestens einem der vorhergehenden Ansprüche aufweist.

10. Fertigungsverfahren eines Luftreifens, **dadurch gekennzeichnet, dass** ein Draht (6) mittels einer Nadel (12) nach mindestens einem der Ansprüche 1 bis 8 in ein Gummi enthaltendes Element (P) eingeführt wird.

## Claims

1. Needle (12) for inserting a wire (6) into a tyre (2), **characterized in that** it has:
- a piercing zone (18) having an axis of symmetry (14), and
- a duct (30) having a proximal opening (34) and a distal opening (36) opening into the piercing zone (18) and off-centre relative to the axis of symmetry (14), the duct consisting of the proximal opening and of a rectilinear profiled section (29) including the distal opening.

2. Needle according to the preceding claim, in which the distal opening (36) extends entirely on one and the same side of the axis (14).

3. Needle according to at least either one of the preceding claims, in which the distal opening extends entirely at a distance from the axis.

4. Needle according to at least any one of the preceding claims, in which the duct (30) has a duct axis (32) that is inclined relative to the axis of symmetry (14) of the zone.

5. Needle according to at least any one of the preceding claims, in which the piercing zone (18) has an axi-symmetric face (24) into which the distal opening (36) opens entirely.

6. Needle according to at least any one of the preceding claims, in which the needle has a support zone (16) into which the proximal opening (34) opens while being concentric with the support zone.

7. Needle according to at least any one of the preceding claims, made of metal or of metal alloy.

8. Needle according to at least any one of the preceding claims, in which the piercing zone (18) has a greater hardness than that of another portion of the needle.

9. Device (10) for inserting a wire (6) into a tyre (2), **characterized in that** it comprises a needle (12) according to at least any one of the preceding claims.

10. Method for manufacturing a tyre, **characterized in that** a wire (6) is inserted into an element (P) comprising rubber by means of a needle (12) according to at least any one of Claims 1 to 8.
